# FASCICULE DE BREVET EUROPEEN

(11) **EP 3 948 626 B1**
(45) Date de publication et mention de la délivrance du brevet: **20.11.2024**
(21) Numéro de dépôt: 20713050.1
(22) Date de dépôt: 27.03.2020
(51) Int. Cl.: H04L 9/40, G06F 21/64

(54) **PROCÉDÉS ET DISPOSITIFS PERMETTANT DE PROUVER LA CONNAISSANCE D'UNE DONNÉE PAR UN UTILISATEUR D'UNE CHAÎNE DE BLOCS**
VERFAHREN UND VORRICHTUNGEN ZUR BEREITSTELLUNG VON DATENKENNTNISSEN DURCH EINEN BENUTZER EINER BLOCKKETTE
METHODS AND DEVICES ALLOWING TO PROVE KNOWLEDGE OF DATA BY A USER OF A BLOCK CHAIN

(30) Priorité: 29.03.2019 FR 1903369
(43) Date de publication de la demande: 09.02.2022
(73) Titulaire: Orange, 92130 Issy-les-Moulineaux (FR)
(72) Inventeur: BERTIN, Emmanuel, 92326 Châtillon Cedex (FR); HATIN, Julien, 92326 Châtillon Cedex (FR)
(74) Mandataire: Cabinet Beau de Loménie
(86) Numéro de dépôt international: PCT/EP2020/058807
(87) Numéro de publication internationale: WO 2020/201134

(56) Documents cités:
- US-A1- 2018 198 630
- US-A1- 2018 365 448

## Description

### Technique antérieure

L'invention se rapporte au domaine général des réseaux de télécommunications, et plus précisément à la technologie des chaînes de blocs (en anglais « blockchain »).

Comme indiqué dans le document (https://fr.wikipedia.org/wiki/Blockchain), on rappelle que « la technologie des chaînes de blocs est une technologie de stockage et de transmission d'informations sans organe de contrôle. Techniquement, il s'agit d'une base de données distribuée dont les informations envoyées par les utilisateurs et les liens internes à la base sont vérifiés et groupés à intervalles de temps réguliers en blocs, l'ensemble étant sécurisé par cryptographie, et formant ainsi une chaîne.

Par extension, une chaîne de blocs est une base de données distribuée qui gère une liste d'enregistrements protégés contre la falsification ou la modification par les noeuds de stockage ; c'est donc un registre distribué et sécurisé de toutes les transactions effectuées depuis le démarrage du système réparti».

Les chaînes de blocs sont caractérisées en outre en ce que leurs contenus ne peuvent pas être modifiés ou supprimés : une information publiée dans une chaîne de blocs le reste pour toujours. Nous désignons par information « publiée » dans une chaîne de blocs, une information enregistrée ou sauvegardée dans celle-ci.

Une problématique qui se pose dans le cadre de la technologie des chaines de blocs est de certifier des données des utilisateurs. Notamment, ces données peuvent être relatives à des attributs des utilisateurs tels que leurs noms, prénoms, adresses, numéros de téléphone, compte sur un réseau social, etc. Un mécanisme dit « de preuve » est requis pour assurer que les données des utilisateurs sont des données correctes (vraies).

L'article Al-Bassam, M., "A smart contract-based PKI and identity system", Proc. ACM Workshop on Blockchain, Cryptocurrencies and Contracts. ACM, 2017. pages 35-40, propose un modèle de gestion d'identités des utilisateurs basé sur des contrats intelligents (connus sous le nom de « Smart Contracts » en anglais). Dans ce modèle, un utilisateur publie ses attributs de manière à les rendre publiques. Les attributs peuvent alors être signés par un tiers sur la chaîne de blocs afin de garantir leur authenticité.

Cette solution oblige l'utilisateur à divulguer ses données personnelles à tous les utilisateurs de la chaîne. La demande de brevet US 2018/0365448 A1 divulgue un service de notaire qui permet de vérifier qu'un utilisateur a accès a des données avant une date donnée.

Il existe donc un besoin d'une méthode de vérification de la certification de données des utilisateurs qui ne présente pas les inconvénients des méthodes de l'art antérieur.

### Exposé de l'invention

La portée de l'invention est déterminée par les revendications indépendantes.

L'invention vise un procédé de demande d'attestation auprès d'une entité de confiance inscrite à une chaîne de blocs de la connaissance d'une première donnée par un utilisateur inscrit à la chaîne de blocs, la première donnée appartenant à l'utilisateur, le procédé comportant des étapes de :
- réception en dehors de la chaîne de blocs, en provenance de l'entité de confiance, d'une deuxième donnée obtenue à partir de ladite première donnée, l'entité de confiance ayant eu connaissance de la première donnée en dehors de la chaîne de blocs ; et
- publication, par un terminal de l'utilisateur, de la deuxième donnée dans la chaîne de blocs; ladite entité de confiance étant configurée pour publier la deuxième donnée dans la chaîne de blocs à une date ultérieure à la date de la publication de la deuxième donnée dans la chaîne de blocs par le terminal de l'utilisateur.

Corrélativement, l'invention vise un terminal d'un utilisateur inscrit à une chaîne de blocs, le terminal étant configuré pour demander une attestation auprès d'une entité de confiance inscrite à la chaîne de blocs, de la connaissance d'une première donnée par l'utilisateur, la première donnée appartenant à l'utilisateur ce terminal comportant :
- des moyens de communication configurés pour recevoir en dehors de la chaîne de blocs, en provenance de l'entité de confiance, une deuxième donnée obtenue à partir de la première donnée, l'entité de confiance ayant eu connaissance de la première donnée en dehors de la chaîne de blocs ; et
- un module de publication configuré pour publier la deuxième donnée dans la chaîne de blocs et pour envoyer, au dispositif comportant l'entité de confiance une notification, suite à la publication de la deuxième donnée dans la chaîne de blocs par le ou une date de publication de la deuxième donnée dans la chaîne par ledit terminal ;
l'entité de confiance étant configurée pour publier la deuxième donnée dans la chaîne de blocs à une date ultérieure à la date de la publication de la deuxième donnée dans la chaîne de blocs par le terminal de l'utilisateur.

Les caractéristiques et avantages du procédé de demande d'attestation selon l'invention présentés ci-après s'appliquent de la même façon au terminal selon l'invention et vice versa.

Au sens de l'invention, la première donnée peut être une donnée personnelle de l'utilisateur (ou attribut): nom, prénom, numéro de téléphone, adresse postale, adresse e-mail, âge, profession, etc. La première donnée peut être également un objet multimédia tel qu'une photo, une vidéo, un document de texte, etc. Autrement dit, la première donnée est une donnée appartenant à l'utilisateur ou propre à l'utilisateur. L'utilisateur détenant la première donnée, a ainsi connaissance de cette première donnée.

Dans la description, nous utilisons de façon équivalente, et pour une même signification, les expressions de « utilisateur inscrit à la chaîne de blocs » ou de « terminal (de cet utilisateur) inscrit à la chaîne de blocs ». On notera qu'un utilisateur peut avoir plusieurs terminaux.

Conformément à l'invention, le terminal peut être un téléphone mobile de type smartphone, un ordinateur, une tablette, ou tout autre dispositif communicant permettant à un utilisateur d'accéder à une chaîne de blocs.

Tel que mentionné précédemment, on désigne par une donnée publiée dans la chaîne de blocs, une donnée enregistrée sur celle-ci. Pour publier une donnée dans la chaîne de blocs, un utilisateur envoie cette donnée à la chaine de blocs. Suite à l'envoi de la donnée, un utilisateur « mineur » ou « valideur » insère cette donnée dans un bloc de la chaîne, puis diffuse (publie) le nouveau bloc mis à jour. Au sens de l'invention, on désigne par la date de publication d'une donnée dans la chaîne de blocs, la date d'ajout du bloc à la chaine.

Au sens de l'invention, la publication par un terminal d'un utilisateur (ou par l'entité de confiance) désigne :
- soit une publication dans la chaîne de blocs lorsque cet utilisateur (ou l'entité de confiance) est un utilisateur mineur ou valideur,
- soit une demande de publication pour qu'un autre utilisateur inscrit à la chaîne de blocs en tant que mineur ou valideur publie la deuxième donnée dans la chaîne de blocs.

Conformément à l'invention, l'entité de confiance peut déployer un service Oracle. On rappelle qu'un Oracle est un service autorisé à entrer une donnée dans la chaîne de blocs à la demande d'un utilisateur. A titre indicatif, l'article « Les Oracles, lien entre la blockchain et le monde » de Simon Polrot, publié le 13/09/2016 sur le site « ethereum-france.com » définit et décrit le fonctionnement d'un Oracle.

L'invention permet à un tiers qui consulte la chaîne de blocs de vérifier que l'utilisateur détenait la première donnée. En effet, le terminal publiant la deuxième donnée (obtenue à partir de la première donnée, cette première donnée étant propre ou appartenant à l'utilisateur) avant l'entité de confiance, on s'assure que le terminal n'a pas simplement recopié la deuxième donnée publiée dans la chaîne de blocs par l'Oracle, mais qu'il a effectivement reçu la donnée de l'Oracle par une autre voie. Le fait qu'il a reçu la deuxième donnée de l'Oracle par une autre voie et que cette deuxième donnée a été générée par l'Oracle à partir de la première donnée constitue une preuve que l'utilisateur détenait la première donnée avant que l'Oracle ne rende publique la preuve de connaissance de la deuxième donnée par l'utilisateur.

Au sens de l'invention, une « date » peut désigner un instant, une heure, un jour, ou n'importe quelle mesure temporelle.

L'invention permet aussi d'éviter à l'utilisateur de divulguer sa première donnée aux utilisateurs de la chaîne hormis Oracle. L'invention permet donc de protéger les données personnelles de l'utilisateur.

Cependant, il est envisageable que l'étape de publication par le terminal comporte en outre une publication de la première donnée.

Dans un mode de réalisation, le procédé de demande d'attestation conforme à l'invention comporte en outre une étape d'envoi par l'utilisateur, en dehors de la chaîne de blocs, de la première donnée à l'entité de confiance. Cette étape d'envoi de la première donnée, en dehors de la chaîne de blocs, peut être mise en oeuvre via un réseau de communication entre le terminal de l'utilisateur et l'entité de confiance.

La première donnée peut être envoyée, par un terminal de l'utilisateur par exemple, sous forme d'un message vocal ou d'un texte.

Dans un mode de réalisation, l'étape de réception de la deuxième donnée est mise en oeuvre par un terminal de l'utilisateur.

Les étapes du procédé de demande d'attestation conforme à l'invention, d'envoi de la première donnée, de réception de la deuxième donnée, et de publication peuvent être mises en oeuvre par un même terminal de l'utilisateur ou par différents terminaux de l'utilisateur.

Dans un mode de réalisation, le procédé de demande d'attestation conforme à l'invention comporte en outre une étape d'envoi à l'entité de confiance, d'une requête de la deuxième donnée. Cette requête peut comprendre la première donnée ou un identifiant permettant à l'entité de confiance d'identifier la première donnée. La deuxième donnée est reçue en provenance de l'entité de confiance en réponse à cette requête.

Dans un autre mode, la deuxième donnée est reçue sans qu'une requête ait été envoyée. Par exemple, la décision d'envoyer la deuxième donnée est prise par l'entité de confiance ou par l'Oracle.

Dans un mode de réalisation, l'étape de publication par le terminal comporte en outre une publication d'une information d'horodatage de cette publication. Cette information d'horodatage peut être utilisée par un tiers qui consulte la chaine de blocs pour comparer des dates de publications. Cependant, le tiers peut retrouver dans la chaîne de blocs cette date de publication ; il n'est pas donc nécessaire que cette date soit publiée explicitement.

Dans un mode de réalisation, la deuxième donnée est publiée avec la première donnée.

Dans un autre mode, la deuxième donnée est publiée en association avec une information permettant d'identifier un type de la première donnée, par exemple une information de type « cette publication est relative à un numéro de téléphone d'Alice (Alice est l'utilisateur et son numéro de téléphone est la première donnée) ».

Dans un mode de réalisation, ce procédé de demande d'attestation conforme à l'invention comporte en outre une étape d'envoi, en dehors de la chaîne de blocs, à l'entité de confiance :
- d'une date dite de publication à laquelle l'étape de publication par le terminal est mise en oeuvre ; et/ou
- d'une plage de dates durant laquelle l'entité de confiance doit publier la deuxième donnée dans la chaîne de blocs.

Ce mode permet de garantir que la deuxième donnée est publiée par le terminal de l'utilisateur avant l'entité de confiance.

Dans un mode de réalisation de l'invention, le procédé de demande d'attestation conforme à l'invention comporte en outre une étape de sélection d'une ou de plusieurs entités de confiance inscrite(s) à la chaîne de blocs.

Ce mode permet à l'utilisateur de choisir avec quelle(s) entité(s) de confiance il collabore pour prouver qu'il connaît la première donnée. Ce mode permet aussi à l'utilisateur de choisir le nombre d'entités de confiance.

L'invention vise également un procédé permettant de prouver la connaissance d'une première donnée par un utilisateur inscrit à une chaîne de blocs, la première donnée appartenant à l'utilisateur, ce procédé étant mis en oeuvre par une entité de confiance inscrite à la chaîne de blocs et comportant des étapes de :
- obtention de la première donnée en dehors de la chaîne de blocs ;
- génération d'une deuxième donnée à partir de la première donnée ;
- envoi, en dehors de la chaîne de blocs, de la deuxième donnée à l'utilisateur ;
- publication de la deuxième donnée dans la chaîne de blocs après une publication de la deuxième donnée dans la chaîne de blocs par un terminal de l'utilisateur.

Corrélativement, l'invention vise un dispositif de communication, comportant une entité de confiance inscrite à une chaîne de blocs, le dispositif étant configuré pour permettre de prouver la connaissance d'une première donnée par un utilisateur inscrit à la chaîne de blocs, la première donnée appartenant à l'utilisateur, le dispositif comportant :
- des moyens de communication configurés pour obtenir la première donnée en dehors de la chaîne de blocs ;
- un module de génération configuré pour générer une deuxième donnée à partir de la première donnée ;
- les moyens de communication étant configurés en outre pour envoyer, en dehors de la chaîne de blocs, la deuxième donnée à l'utilisateur ; et
- un module de publication configuré pour publier la deuxième donnée dans la chaîne de blocs après une publication de la deuxième donnée dans la chaîne de blocs par un terminal de l'utilisateur.

Les caractéristiques et avantages de ce procédé permettant de prouver la connaissance selon l'invention présentés ci-après s'appliquent de la même façon au dispositif selon l'invention et vice versa.

Les caractéristiques et avantages du procédé de demande (et du terminal) selon l'invention déjà présentés s'appliquent de la même façon au procédé permettant de prouver la connaissance et au dispositif selon l'invention et vice versa.

On notera que l'entité de confiance envoi la deuxième donnée à l'utilisateur, cet utilisateur étant détenteur de la première donnée. Ainsi, la publication de la deuxième donnée par un terminal de l'utilisateur avant l'entité de confiance, prouve que l'utilisateur a effectivement reçu la deuxième donnée de l'entité de confiance. L'utilisateur étant détenteur de la première donnée, a connaissance de cette première donnée.

Dans un mode de réalisation, l'étape d'obtention de la première donnée comporte une réception de celle-ci en provenance d'un terminal de l'utilisateur.

Dans un autre mode de réalisation, l'étape d'obtention de la première donnée comporte la réception d'un identifiant permettant à l'entité de confiance d'identifier la première donnée.

Dans un mode de réalisation, le dispositif conforme à l'invention envoie la deuxième donnée à un terminal de l'utilisateur. En particulier, ce terminal peut être différent du terminal en provenance duquel le dispositif a reçu la première donnée. Dans d'autres termes, dans ce mode de réalisation, le dispositif a reçu la première donnée en provenance d'un premier terminal de l'utilisateur, et il envoi la deuxième donnée à un deuxième terminal de l'utilisateur.

Dans un mode de réalisation, le dispositif conforme à l'invention met en oeuvre un service Oracle.

Dans un mode de réalisation, la deuxième donnée envoyée au terminal est un mot de passe à usage unique, généré selon une méthode OTP (pour « One-Time Password » en anglais). Ce mot de passe peut être envoyé à un numéro de téléphone ou une adresse email ou postale de l'utilisateur.

Dans un autre mode de réalisation, la deuxième donnée est générée par un hachage ou un chiffrement de la première donnée et/ou d'un aléa généré par l'entité de confiance.

Dans un mode de réalisation, la deuxième donnée est un fichier signé avec une clé privée de l'entité de confiance.

Dans un mode de réalisation, le procédé permettant de prouver la connaissance de la première donnée comporte en outre une étape de détection de la publication de la deuxième donnée dans la chaîne de blocs par un terminal de l'utilisateur. Cette étape de détection comporte une lecture de blocs de la chaîne de blocs pour y détecter la présence de la deuxième donnée. Dans ce mode, le dispositif conforme à l'invention et comportant l'entité de confiance surveille le contenu de la chaîne de données jusqu'à la détection de la deuxième donnée.

Dans un mode de réalisation, le procédé permettant de prouver la connaissance de la première donnée comporte en outre une étape d'attente d'une date de publication précédemment communiquée par l'utilisateur. Cette date de publication peut correspondre soit à la date à laquelle l'utilisateur envisage de publier la deuxième donnée, soit à la date à laquelle il souhaite que l'entité de confiance publie la deuxième donnée.

Dans un mode de réalisation, l'étape de publication est mise en oeuvre par le dispositif conforme à l'invention suite à la détection d'un ajout d'au moins un bloc à la chaîne de blocs.

Dans un autre mode, la deuxième donnée est publiée en association avec une information permettant d'identifier un type de la première donnée, par exemple une information de type « cette publication est relative à un numéro de téléphone d'Alice ».

Dans un mode de réalisation, les étapes de publication, par le terminal et par l'entité de confiance déployée dans le dispositif, sont mises en oeuvre par des méthodes identifiées dans un contrat intelligent déployé par l'utilisateur du terminal, ce contrat intelligent pouvant en outre comporter des adresses des utilisateurs autorisés à invoquer ces méthodes.

A titre d'exemple, une méthode de type « Publish Attribute » permettant de publier la première donnée n'est autorisée à être invoquée que par l'utilisateur. Une méthode de type « Publish Server Attribute Proof » permettant de publier la deuxième donnée générée par l'entité de confiance n'est autorisée à être invoquée que par l'entité de confiance. Une méthode de type « « Publish User Attribute Proof » permettant de publier la deuxième donnée après sa réception par l'utilisateur n'est quant à elle autorisée à être invoquée que par l'utilisateur.

On rappelle qu'un contrat intelligent (en anglais « Smart Contract ») est un programme informatique autonome, qui une fois démarré, exécute automatiquement des conditions définies au préalable et inscrites dans la chaîne de blocs (https://blockchainfrance.net/2016/01/28/applications-smart-contracts/). A titre d'exemple, les applications décentralisées dApps du projet Ethereum (marque déposée) constituent des contrats intelligents au sens de l'invention.

L'invention vise également un système permettant de prouver la connaissance d'une première donnée par un utilisateur inscrit à une chaîne de blocs. Ce système comporte au moins un terminal de l'utilisateur, ce terminal étant conforme à l'invention, et un dispositif conforme à l'invention comportant une entité de confiance. Bien entendu, le système peut comporter plusieurs terminaux de l'utilisateur, ces terminaux étant conformes à l'invention, et un dispositif conforme à l'invention comportant une entité de confiance.

L'invention vise également un procédé de vérification de la connaissance d'une première donnée par un utilisateur inscrit à une chaîne de blocs, la première donnée appartenant à l'utilisateur, ce procédé étant mis en oeuvre par un équipement de vérification pouvant consulter la chaîne de blocs et comportant des étapes de :
- détection d'une publication dans la chaîne de blocs par un terminal de l'utilisateur d'une deuxième donnée obtenue à partir de la première donnée;
- détection d'une publication de la deuxième donnée dans la chaîne de blocs par une entité de confiance inscrite à la chaîne de blocs; et
- vérification en fonction desdites publications si la deuxième donnée est publiée dans la chaîne de blocs par le terminal avant d'être publiée par l'entité de confiance, le résultat de ladite vérification permettant de déterminer si l'utilisateur connaissait ou non la première donnée à une date antérieure aux dates des publications.

Corrélativement, l'invention vise un équipement de vérification de la connaissance d'une première donnée par un utilisateur inscrit à une chaîne de blocs, la première donnée appartenant à l'utilisateur, l'équipement de vérification pouvant consulter la chaîne de blocs et comportant:
- un module de détection configuré pour détecter dans la chaîne de blocs:
   * une publication par un terminal dudit utilisateur d'une deuxième donnée; et
   * une publication de la deuxième donnée par une entité de confiance inscrite à la chaîne de blocs, la deuxième donnée ayant été générée par l'entité de confiance à partir de ladite première donnée; et
- un module de décision configuré pour vérifier en fonction des publications détectées, si la deuxième donnée a été publiée dans la chaîne de blocs par le terminal avant d'avoir été publiée par l'entité de confiance, le résultat de la vérification permettant de déterminer si l'utilisateur connaissait ou non la première donnée à une date antérieure aux dates des publications.

Les caractéristiques et avantages du procédé de demande et du procédé permettant de prouver la connaissance de la première donnée, conformes à l'invention, présentés précédemment s'appliquent de la même façon au procédé et équipement de vérification selon l'invention et vice versa.

Conformément à l'invention, lorsque le résultat de la vérification montre que la deuxième donnée est publiée dans la chaîne de blocs par le terminal de l'utilisateur avant d'avoir été publiée par l'entité de confiance, l'équipement de vérification détermine que l'utilisateur connaissait déjà la première donnée à une date antérieure aux dates des publications (par le terminal et par l'entité de confiance).

Les blocs publiés dans la chaîne de blocs sont immuables. La durée de la vérification n'est donc pas limitée.

L'invention vise également un premier programme d'ordinateur sur un support d'enregistrement, ce programme étant susceptible d'être mis en oeuvre dans un ordinateur ou un terminal conforme à l'invention. Ce programme comporte des instructions adaptées à la mise en oeuvre d'un procédé de demande tel que décrit ci-dessus.

L'invention vise également un deuxième programme d'ordinateur sur un support d'enregistrement, ce programme étant susceptible d'être mis en oeuvre dans un ordinateur ou un dispositif comportant une entité de confiance conforme à l'invention. Ce programme comporte des instructions adaptées à la mise en oeuvre d'un procédé permettant de prouver la connaissance de la première donnée tel que décrit ci-dessus.

L'invention vise également un troisième programme d'ordinateur sur un support d'enregistrement, ce programme étant susceptible d'être mis en oeuvre dans un ordinateur ou un équipement de vérification conforme à l'invention. Ce programme comporte des instructions adaptées à la mise en oeuvre d'un procédé de vérification tel que décrit ci-dessus.

Chacun de ces programmes peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'information ou un support d'enregistrement lisibles par un ordinateur, et comportant des instructions du premier ou du deuxième ou du troisième programme d'ordinateur tel que mentionné ci-dessus.

Les supports d'information ou d'enregistrement peuvent être n'importe quelle entité ou dispositif capable de stocker les programmes. Par exemple, les supports peuvent comporter un moyen de stockage, tel qu'une ROM, par exemple un CD ROM ou une ROM de circuit microélectronique, ou encore un moyen d'enregistrement magnétique, par exemple une disquette (floppy dise) ou un disque dur, ou une mémoire flash.

D'autre part, les supports d'information ou d'enregistrement peuvent être des supports transmissibles tels qu'un signal électrique ou optique, qui peut être acheminé via un câble électrique ou optique, par lien radio, par lien optique sans fil ou par d'autres moyens.

Les programmes selon l'invention peuvent être en particulier téléchargés sur un réseau de type Internet.

Alternativement, chaque support d'informations ou d'enregistrement peut être un circuit intégré dans lequel un programme est incorporé, le circuit étant adapté pour exécuter ou pour être utilisé dans l'exécution de l'un des procédés conformes à l'invention.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 est un organigramme représentant des étapes d'un procédé de demande et d'un procédé permettant de prouver la connaissance d'une première donnée par un utilisateur à une date déterminée, les procédés étant mis en oeuvre selon un mode de réalisation particulier ;
- la figure 2 est un organigramme représentant des étapes d'un procédé de vérification, mis en oeuvre selon un mode de réalisation particulier ;
- la figure 3 représente des architectures fonctionnelles, selon un mode de réalisation particulier, d'un système, d'un terminal et d'un dispositif ;
- la figure 4 présente une architecture fonctionnelle d'un équipement de vérification dans un mode de réalisation particulier ;
- la figure 5 présente une architecture matérielle d'un terminal selon un mode de réalisation particulier ;
- la figure 6 présente une architecture matérielle d'un dispositif selon un mode de réalisation particulier ; et
- la figure 7 présente une architecture matérielle d'un équipement de vérification selon un mode de réalisation particulier.

### Description des modes de réalisation

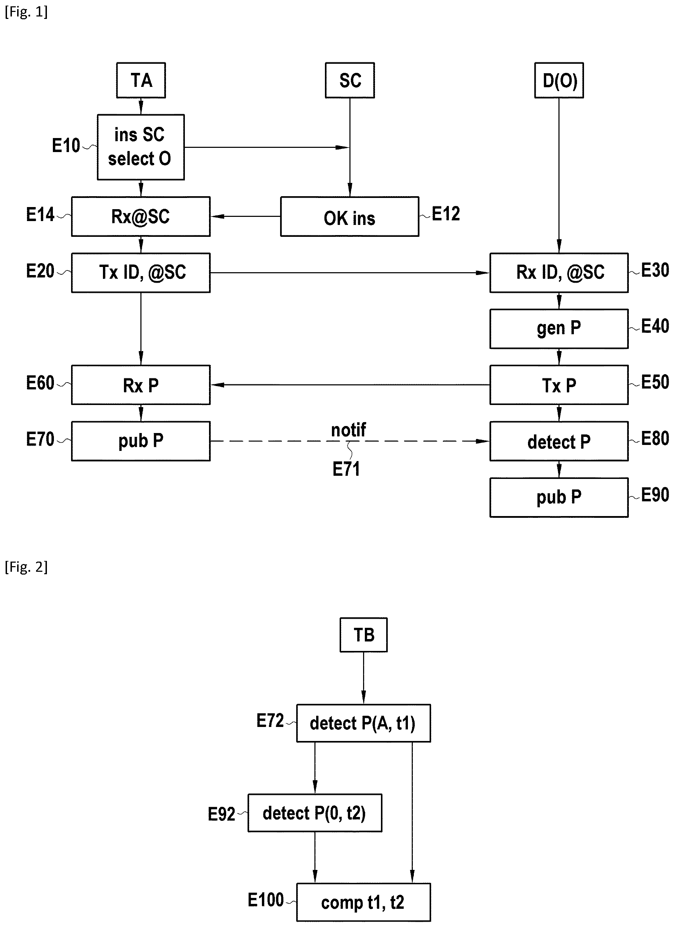

La **figure 1** est un organigramme représentant des étapes d'un procédé de demande d'attestation mis en oeuvre par un terminal TA d'un utilisateur A et des étapes d'un procédé permettant de prouver la connaissance d'une première donnée ID par l'utilisateur A, mis en oeuvre par un dispositif D comportant une entité de confiance O ; les deux procédés étant conformes à l'invention. Le terminal TA et le dispositif D sont conformes à l'invention. L'utilisateur A ainsi que l'entité de confiance O sont inscrits à une chaîne de blocs CB. La première donnée appartenant à l'utilisateur A, l'utilisateur A dispose de la connaissance de la première donnée ID.

Les étapes E10, E20, E60 et E70 décrites ci-après sont des étapes du procédé de demande d'attestation, mis en oeuvre par le terminal TA.

Dans le mode décrit ici, l'entité de confiance O est un Oracle.

Les étapes E30, E40, E50, E80 et E90 décrites ci-après sont des étapes du procédé permettant de prouver la connaissance d'une première donnée, mis en oeuvre par le dispositif D ou par l'entité de confiance O.

Au cours d'une étape E10, le terminal TA déploie un contrat intelligent SC, dans lequel sont identifiées des méthodes de publication dans la chaîne de blocs devant être utilisées par l'utilisateur A et par l'entité de confiance O, ainsi que les adresses des utilisateurs autorisés à invoquer ces méthodes. Nous notons toutefois que le déploiement d'un contrat intelligent ne présente qu'un mode particulier de réalisation. Les procédés de l'invention peuvent s'appliquer dans d'autres contextes, avec d'autres méthodes régissant des publications sur la chaîne de blocs.

Au cours de cette même étape E10, le terminal TA sélectionne l'entité de confiance O. Alternativement, le terminal TA peut sélectionner plusieurs entités de confiance.

Au cours d'une étape E12, le contrat intelligent SC déployé dans la chaîne de blocs envoie un acquittement positif au terminal TA pour lui confirmer la publication de ce contrat SC et lui renvoie l'adresse de ce contrat, @SC.

Le terminal TA reçoit cet acquittement et l'adresse @SC au cours d'une étape E14.

Au cours d'une étape E20, le terminal TA envoie en dehors de la chaîne de blocs CB, la première donnée ID à l'entité de confiance.

Dans le mode décrit ici, la première donnée ID est un attribut identifiant l'utilisateur A, tel que son numéro de téléphone.

L'envoi E20 en dehors de la chaîne de blocs se fait via un réseau de communication entre le terminal TA et le dispositif D déployant l'entité de confiance. A titre d'exemples, cet envoi E20 peut se faire via une communication radio, ou une communication filaire. Aucune limitation n'est apportée au type de communication utilisée pour transmettre la première donnée à l'entité de confiance.

Dans un mode de réalisation particulier, au cours de l'étape E20, le terminal TA envoie également à l'entité de confiance O, l'adresse @SC du contrat intelligent SC, l'entité de confiance O pouvant alors s'en servir pour publier des données sur la chaîne de blocs conformément à des méthodes du contrat SC.

Au cours d'une étape E30, l'entité de confiance O reçoit cette première donnée ID, ainsi que le cas échéant l'adresse @SC du contrat intelligent SC.

Dans un autre mode de réalisation, l'entité de confiance O peut être gérée par un opérateur téléphonique auprès duquel l'utilisateur A est abonné. L'entité de confiance O peut accéder à une base de données comportant des identifiants d'abonnés et leurs numéros de téléphone. Le terminal de l'utilisateur TA peut envoyer à l'entité de confiance O un identifiant permettant d'obtenir le numéro de téléphone de l'utilisateur, par exemple le nom et le prénom de l'utilisateur ou le numéro de sa pièce d'identité. L'entité de confiance obtient alors la première donnée (numéro de téléphone de l'utilisateur) en interrogeant la base de données.

Au cours d'une étape E40, l'entité de confiance O génère une deuxième donnée P à partir de la première donnée ID.

La deuxième donnée P peut être associée à la date de sa génération. Elle peut être un code OTP, ou une donnée obtenue par compression de la première donnée ID, ou par chiffrement de la première donnée ID, ou un fichier signé par une clé privée de l'entité de confiance de type Oracle.

Au cours d'une étape E50, l'entité de confiance O envoie en dehors de la chaîne de blocs CB, la deuxième donnée P à l'utilisateur A.

Lorsque la deuxième donnée P est un code OTP, l'envoi E50 peut se faire via un réseau de communication et être destiné à un numéro de téléphone, une adresse e-mail ou une adresse postale de l'utilisateur A.

Dans le mode décrit ici, cet envoi E50 est effectué via un réseau de communication connectant le terminal TA au dispositif D.

Au cours d'une étape E60, le terminal TA reçoit via le réseau de communication (en dehors de la chaîne de blocs CB), la deuxième donnée en provenance de l'entité de confiance O.

Au cours d'une étape E70, le terminal TA publie à une date t1 la deuxième donnée P dans la chaîne de blocs CB, en utilisant dans le mode de réalisation décrit la méthode mentionnée dans le contrat intelligent SC. Plus précisément, le terminal TA transmet à destination de la chaîne de blocs une demande de publication de la deuxième donnée P. La demande est signée avec la clé privée de l'utilisateur A.

Alternativement, le terminal TA peut utiliser une méthode classique de publication dans la chaine de blocs CB, sans recours au contrat intelligent SC.

Au cours d'une étape E80, l'entité de confiance O détecte la publication de la deuxième donnée P par le terminal TA, par lecture des blocs émis dans la chaine de blocs CB.

Suite à cette détection, l'entité de confiance O publie à son tour, à une date t2, au cours d'une étape E90, la deuxième donnée P dans la chaîne de blocs CB, selon la méthode mentionnée dans le contrat intelligent SC.

Dans un autre mode de réalisation, suite à la publication E70 de la deuxième donnée P par le terminal TA, ce terminal TA envoie au cours d'une étape E71 une notification au dispositif D pour notifier l'entité de confiance O de la publication E70. Sur réception de cette notification, l'entité de confiance O publie (E90) alors la deuxième donnée P. Plus précisément, lors de l'étape E90, l'entité de confiance O transmet à destination de la chaîne de blocs une demande de publication de la deuxième donnée P. La demande est signée avec la clé privée de l'entité de confiance O.

Dans un autre mode de réalisation, par exemple au cours de l'étape d'envoi E20, le terminal TA envoie au dispositif D une donnée relative à une date de publication (t1) à laquelle le terminal TA compte publier la deuxième donnée P. A la réception de cette donnée, le dispositif D surveille l'occurrence de cette date t1 dans le temps (en utilisant un compteur à rebours par exemple) et publie (E90) à son tour la deuxième donnée P après l'occurrence de cette date t1 (à l'expiration du compteur à rebours).

Dans un autre mode de réalisation, par exemple au cours de l'étape d'envoi E20, le terminal TA envoie au dispositif D une donnée relative à une date de publication (t2) à laquelle le dispositif D doit publier la deuxième donnée P. A la réception de cette donnée, le dispositif D surveille l'occurrence de cette date t2 dans le temps (en utilisant un compteur à rebours par exemple) et publie (E90) la deuxième donnée P à l'occurrence de cette date t2 (à l'expiration du compteur à rebours). Préférentiellement, le dispositif D vérifie avant cette publication E90 que la deuxième donnée P a bien été publiée (E70) dans la chaîne de blocs CB par le terminal TA.

Dans un autre mode de réalisation, le dispositif D vérifie la publication de la donnée D dans la chaine de blocs par le terminal A, puis attend la publication d'un nombre n prédéterminé de nouveaux blocs ajoutés à la chaine de blocs avant de publier (E90) la deuxième donnée D. Le nombre n peut par exemple être égal ou supérieur à 3.

En cas de bifurcation de la chaîne de blocs CB, le dispositif D peut ne considérer que le nombre de blocs ajoutés à la branche principale de la chaîne CB.

Dans le mode décrit en référence à la figure 1, le même terminal TA de l'utilisateur A met en oeuvre les étapes d'envoi E20 de la première donnée ID, de réception E60 de la deuxième donnée P et de publication E70 de celle-ci. Alternativement, ces étapes E20, E60 et E70 peuvent être mises en oeuvre chacune par un terminal de l'utilisateur A, différent des terminaux mettant en oeuvre les autres étapes. Par exemple, l'étape d'envoi E20 est mise en oeuvre par un premier terminal de l'utilisateur A et les étapes de réception E60 de la deuxième donnée P et de publication E70 de celle-ci sont mises en oeuvre par un deuxième terminal de l'utilisateur A, le deuxième terminal étant différent du premier terminal.

La **figure 2** est un organigramme représentant des étapes d'un procédé de vérification de la connaissance de la première donnée ID par l'utilisateur A. Ce procédé est mis en oeuvre par un équipement de vérification TB, le procédé et l'équipement TB étant conformes à l'invention.

Dans ce mode, l'équipement de vérification TB est inscrit à la chaîne de blocs CB. Cet équipement TB peut être un terminal d'un utilisateur B. Cependant, pour mettre en oeuvre le procédé de vérification conforme à l'invention, il est suffisant que l'équipement de vérification soit capable de consulter le contenu de la chaîne CB, sans pour autant être inscrit.

L'équipement TB consulte les publications dans la chaîne de blocs CB.

Au cours d'une étape E72, l'équipement TB détecte la publication par le terminal TA de la deuxième donnée P obtenue (E30) à partir de la première donnée ID.

Au cours d'une étape E92, l'équipement TB détecte la publication par l'entité de confiance O de la deuxième donnée P.

Dans le mode décrit ici, au moins l'une des étapes de publication E70 et E90 comporte, en plus de la publication de la deuxième donnée P, celle d'une information sur le type de la première donnée ID, de sorte à ce que l'équipement TB puisse déterminer que la deuxième donnée P a été obtenue à partir de la première donnée ID. Par exemple, considérant que la première donnée ID comporte un numéro de téléphone de l'utilisateur A, l'une des publications E70 ou E90 comporte aussi une information de type « cette publication est relative au numéro de téléphone de l'utilisateur A ».

En retrouvant la même deuxième donnée P dans les deux publications E70 et E90, l'équipement de vérification TB peut déduire qu'elles sont toutes les deux (E70 et E90) relatives à la même première donnée ID. Préférentiellement, chacune des étapes de publication E70 et E90 comporte la publication de l'information sur le type de la première donnée ID.

Les étapes de détection E72 et E92 peuvent être mises en oeuvre simultanément, ou l'une après l'autre peu importe l'ordre de leurs mises en oeuvre.

Au cours d'une étape E100, l'équipement de vérification TB compare les dates des publications, t1 et t2. Dans l'exemple décrit en référence à la figure 1, la date t1 est antérieure à la date t2 ; l'équipement TB détermine alors que l'utilisateur A avait connaissance de la deuxième donnée et, en conséquence d'une première donnée utilisée pour générer la première donnée de la première donnée ID à une date nécessairement antérieure à la date t1 de la publication E70.

Dans un autre mode de réalisation, au cours de l'étape E100, l'équipement de vérification TB détermine que la deuxième donnée P est enregistrée dans deux blocs différents de la chaîne de blocs CB, et que la deuxième donnée P publiée à l'initiative du terminal A a été publiée dans un bloc antérieur (selon l'ordonnancement des blocs dans la chaîne) à celui dans lequel la deuxième donnée P a été publiée à l'initiative de l'entité de confiance. Par exemple la deuxième donnée P publiée à l'initiative de l'entité de confiance est publiée dans un bloc concaténé à la chaîne CB se trouvant après un nombre n de blocs compté à partir du bloc dans lequel figure la deuxième donnée P publiée à l'initiative du terminal A, n étant supérieur ou égal à 3 par exemple. Ainsi, l'équipement de vérification TB détermine que la publication E70 est antérieure à la publication E90 et détermine que l'utilisateur A connaissait la première donnée ID au moment où il a publié la deuxième donnée P.

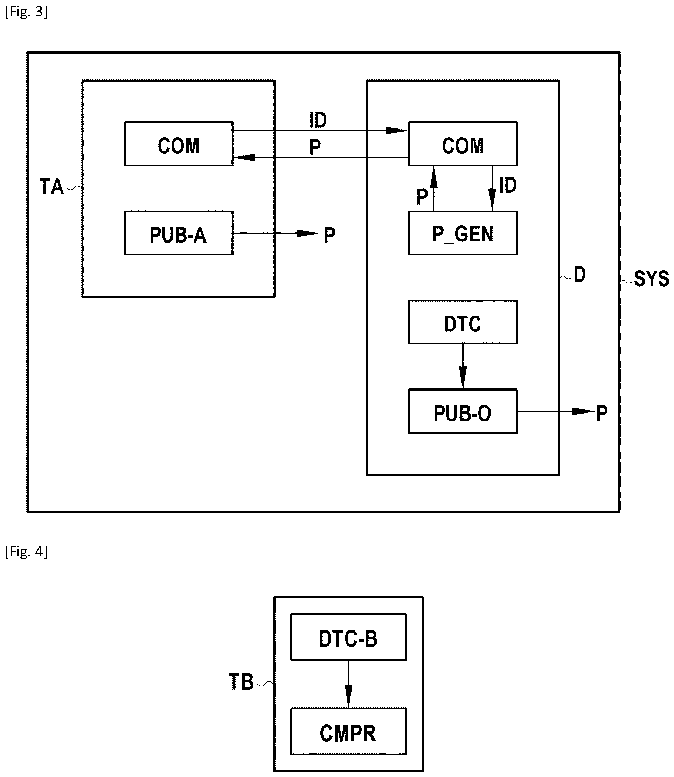

La **figure 3** représente des architectures fonctionnelles, selon un mode de réalisation de l'invention, d'un système SYS, du terminal TA et du dispositif D conformes à l'invention.

Le système SYS comporte le terminal TA et le dispositif D.

L'utilisateur A est inscrit à la chaîne de blocs CB. Le terminal TA comporte des moyens de communication COM configurés pour envoyer (E20), en dehors de la chaîne de blocs CB, la première donnée ID à l'entité de confiance O, déployée par le dispositif D et inscrite à la chaîne de blocs CB ; ces moyens de communication sont configurés en outre pour recevoir (E60), en provenance de l'entité de confiance O et en dehors de la chaîne de blocs CB, la deuxième donnée P.

Le terminal TA comporte également un module de publication PUB-A configuré pour publier, ou plus exactement demander la publication, la deuxième donnée P dans la chaîne de blocs CB. Tel que décrit précédemment, l'entité de confiance O est configurée pour publier (E90) la deuxième donnée P dans la chaîne de blocs à une date ultérieure (t2) à celle (t1) de la publication (E70) par le terminal TA.

Le dispositif D comporte :
- des moyens de communication COM configurés pour recevoir (E30) la première donnée ID en provenance du terminal TA en dehors de la chaîne de blocs CB ;
- un module de génération P_GEN configuré pour générer (E40) la deuxième donnée P à partir de la première donnée ID ;
- lesdits moyens de communication COM étant configurés en outre pour envoyer (E50), en dehors de la chaîne de blocs CB, la deuxième donnée P au terminal TA ; et
- un module de publication PUB-O configuré pour publier (E90) la deuxième donnée P dans la chaîne de blocs CB après une publication (E70) de la deuxième donnée P par un terminal TA de l'utilisateur A.

Dans un mode de réalisation, le dispositif D comporte en outre un module de détection DTC configuré pour détecter (E80) la publication (E70) de la deuxième donnée P dans la chaîne de blocs CB par un terminal TA de l'utilisateur A. Le module de publication PUB-O est configuré pour publier la deuxième donnée P après la détection (E80).

La **figure 4** représente une architecture fonctionnelle, selon un mode de réalisation de l'invention, de l'équipement de vérification TB conforme à l'invention.

Cet équipement TB comporte :
- un module de détection DTC-B configuré pour détecter (E72, E92) dans la chaîne de blocs CB:
   * la publication E70 par le terminal TA de la deuxième donnée P; et
   * la publication de la deuxième donnée P par l'entité de confiance O; et
- un module de décision CMPR configuré pour vérifier si la deuxième donnée P est publiée par le terminal TA avant l'entité de confiance O, ce module détermine que l'utilisateur A avait la connaissance de la première donnée ID à une date antérieure aux dates des publications.

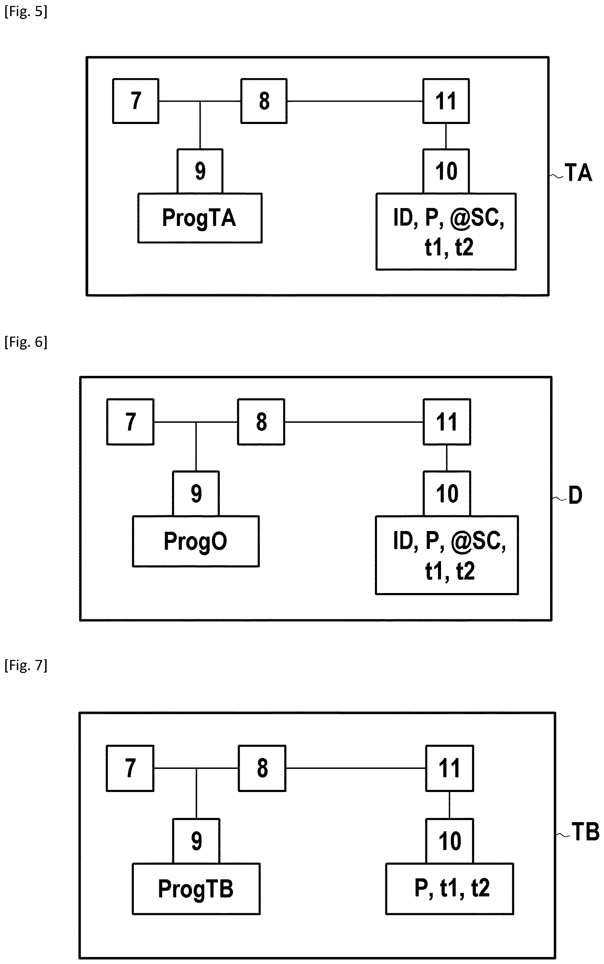

Dans le mode de réalisation décrit ici, le terminal TA, le dispositif D et l'équipement de vérification TB ont chacun l'architecture matérielle d'un ordinateur, telle qu'illustrée aux **figures 5 à 7****.**

L'architecture de chacun d'entre eux (le terminal TA, le dispositif D et l'équipement de vérification TB) comprend notamment un processeur 7, une mémoire vive 8, une mémoire morte 9, une mémoire flash non volatile 10 dans un mode particulier de réalisation de l'invention, ainsi que des moyens de communication 11. De tels moyens sont connus en soi et ne sont pas décrits plus en détail ici.

La mémoire morte 9 du terminal TA constitue un support d'enregistrement conforme à l'invention, lisible par le processeur 7 et sur lequel est enregistré ici un programme d'ordinateur ProgA conforme à l'invention.

La mémoire 10 du terminal TA permet d'enregistrer des variables utilisées pour l'exécution des étapes du procédé de demande d'attestation tel que décrit précédemment, telles que la première donnée ID, la deuxième donnée P, éventuellement l'adresse @SC du contrat intelligent SC, éventuellement la date de publication t1 et/ou la date de publication t2 .

Le programme d'ordinateur ProgTA définit des modules fonctionnels et logiciels ici, configurés pour demander une attestation de la première donnée ID. Ces modules fonctionnels s'appuient sur et/ou commandent les éléments matériels 7-11 du terminal TA cités précédemment.

La mémoire morte 9 du dispositif D constitue un support d'enregistrement conforme à l'invention, lisible par le processeur 7 et sur lequel est enregistré ici un programme d'ordinateur ProgO conforme à l'invention.

La mémoire 10 du dispositif D permet d'enregistrer des variables utilisées pour l'exécution des étapes du procédé tel que décrit précédemment permettant de prouver la connaissance de la première donnée ID par l'utilisateur A du terminal TA, telles que la première donnée ID, la deuxième donnée P, éventuellement l'adresse @SC du contrat intelligent SC, éventuellement la date de publication t1 et/ou la date de publication t2 .

Le programme d'ordinateur ProgO définit des modules fonctionnels et logiciels ici, configurés pour permettre de prouver la connaissance de la première donnée ID par l'utilisateur A. Ces modules fonctionnels s'appuient sur et/ou commandent les éléments matériels 7-11 du dispositif D cités précédemment.

La mémoire morte 9 de l'équipement TB constitue un support d'enregistrement conforme à l'invention, lisible par le processeur 7 et sur lequel est enregistré ici un programme d'ordinateur ProgTB conforme à l'invention.

La mémoire 10 de l'équipement TB permet d'enregistrer des variables utilisées pour l'exécution des étapes du procédé de vérification tel que décrit précédemment, telles que la deuxième donnée P, la date de publication t1, la date de publication t2.

Le programme d'ordinateur ProgTB définit des modules fonctionnels et logiciels ici, configurés pour vérifier la connaissance de la première donnée ID par l'utilisateur A. Ces modules fonctionnels s'appuient sur et/ou commandent les éléments matériels 7-11 de l'équipement TB cités précédemment.

## Revendications

1. Procédé permettant de prouver la connaissance d'une première donnée (ID) par un utilisateur (A) inscrit à une chaîne de blocs (CB), ledit procédé étant mis en oeuvre par une entité de confiance (O) inscrite sur ladite chaîne de blocs et comportant des étapes de :
- obtention (E30) de ladite première donnée (ID) en dehors de ladite chaîne de blocs (CB) ;
- génération (E40) d'une deuxième donnée (P) à partir de ladite première donnée (ID) ;
- envoi (E50), en dehors de ladite chaîne de blocs (CB), de ladite deuxième donnée (P) audit utilisateur (A) ; et
- publication (E90) de la dite deuxième donnée (P) sur ladite chaîne de blocs (CB) après une publication (E70) de la deuxième donnée dans la chaîne de blocs par un terminal de l'utilisateur.

2. Procédé selon la revendication 1 comportant en outre une étape de détection de la publication de la deuxième donnée dans la chaîne de blocs par un terminal de l'utilisateur.

3. Procédé selon la revendication 1 comportant en outre une étape d'attente d'une date de publication communiquée par ledit utilisateur ou une étape d'attente de la détection d'un ajout d'au moins un bloc à la chaîne de blocs.

4. Procédé de demande d'attestation auprès d'une entité de confiance inscrite à une chaîne de blocs (CB) de la connaissance d'une première donnée (ID) par un utilisateur (A) inscrit à ladite chaîne de blocs (CB), ledit procédé comportant des étapes de:
- réception (E60) en dehors de ladite chaîne de blocs (CB), en provenance de ladite entité de confiance (O), d'une deuxième donnée (P) obtenue à partir de ladite première donnée (ID), ladite entité de confiance (O) ayant eu connaissance de ladite première donnée (ID) en dehors de ladite chaîne de blocs (CB) ; et
- publication (E70) par un terminal (TA) dudit utilisateur (A) de la dite deuxième donnée (P) sur ladite chaîne de blocs (CB) ;
- envoi, au dispositif (D) comportant ladite entité de confiance (O) : une notification, ladite notification étant envoyée suite à la publication de ladite deuxième donnée (P) dans la chaîne de blocs par ledit terminal (TA); ou une date de publication (t1) de ladite deuxième donnée (P) dans la chaîne par ledit terminal (TA) ;
ladite entité de confiance étant configurée pour publier (E90) ladite deuxième donnée (P) sur la dite chaîne de blocs à une date (t2) ultérieure à la date (t1) de la publication (E70) de la deuxième donnée dans la chaîne de blocs par le terminal de l'utilisateur.

5. Procédé selon la revendication 4 comportant en outre une étape (E22) d'envoi, en dehors de ladite chaîne de blocs (CB), à ladite entité de confiance (O) :
- d'une date de publication à laquelle l'étape de publication par ledit terminal est mise en oeuvre ; et/ou
- d'une plage de dates durant laquelle ladite entité de confiance doit publier ladite deuxième donnée (P) sur ladite chaîne de blocs (CB).

6. Procédé selon l'une des revendications 4 à 5 comportant en outre une étape de sélection (E10) d'au moins une dite entité de confiance (O) inscrite sur ladite chaîne de blocs.

7. Procédé selon l'une des revendications 1 à 6 dans lequel les dites étapes de publication (E70, E90) sont mises en oeuvre par des méthodes identifiées dans un contrat intelligent (SC) déployé par ledit utilisateur (A), le contrat pouvant en outre comporter des adresses des utilisateurs autorisés à invoquer ces méthodes.

8. Procédé de vérification de la connaissance d'une première donnée (ID) par un utilisateur (A) inscrit à une chaîne de blocs (CB), ledit procédé étant mis en oeuvre par un équipement de vérification (TB) pouvant consulter ladite chaîne de blocs (CB) et comportant des étapes de :
- détection (E72) d'une publication sur ladite chaîne de blocs (CB) par un terminal dudit utilisateur (A) d'une deuxième donnée (P) obtenue à partir de ladite première donnée (ID) ;
- détection (E92) d'une publication de ladite deuxième donnée (P) sur ladite chaîne de blocs (CB) par une entité de confiance (O) inscrite sur ladite chaîne de blocs (CB) ; et
- vérification (E100), en fonction desdites publications détectées, si la deuxième donnée (P) a été publiée dans la chaîne de blocs par le terminal avant d'avoir été publiée par l'entité de confiance, le résultat de ladite vérification (E100) permettant de déterminer si l'utilisateur connaissait ou non la première donnée (ID) à une date antérieure aux dates des publications (E70, E90).

9. Programme d'ordinateur (ProgTA, ProgO, ProgTB) comportant des instructions pour l'exécution :
- des étapes d'un procédé permettant de prouver la connaissance d'une première donnée (ID) par un utilisateur (A) selon l'une quelconque des revendications 1 à 3 ou 7 ; ou
- des étapes d'un procédé de demande d'attestation selon l'une des revendications 4 à 7 ; ou
- des étapes d'un procédé de vérification selon la revendication 8 lorsque ledit programme est exécuté par un ordinateur (TA, D, TB).

10. Support d'enregistrement lisible par un ordinateur sur lequel est enregistré un programme d'ordinateur selon la revendication 9.

11. Dispositif de communication, comportant une entité de confiance (O) inscrite à une chaîne de blocs (CB), ledit dispositif étant configuré pour permettre de prouver la connaissance d'une première donnée (ID) par un utilisateur (A) inscrit sur ladite chaîne de blocs, ledit dispositif comportant :
- des moyens de communication (COM) configurés pour obtenir ladite première donnée (ID) en dehors de ladite chaîne de blocs (CB) ;
- un module de génération (P_GEN) configuré pour générer une deuxième donnée (P) à partir de ladite première donnée (ID) ;
- lesdits moyens de communication étant configurés en outre pour envoyer, en dehors de ladite chaîne de blocs (CB), ladite deuxième donnée (P) audit utilisateur (A) ; et
- un module de publication (PUB-O) configuré pour publier la dite deuxième donnée (P) sur ladite chaîne de blocs (CB) après une publication de la deuxième donnée dans la chaîne de blocs par un terminal (TA) dudit utilisateur (A).

12. Terminal (TA) d'un utilisateur (A) inscrit à une chaîne de blocs (CB), ledit terminal étant configuré pour demander une attestation auprès d'une entité de confiance inscrite à la chaîne de blocs, de la connaissance d'une première donnée (ID) par l'utilisateur, ledit terminal (TA) comportant :
- des moyens de communication (COM) configurés pour recevoir, en provenance de ladite entité de confiance (D), en dehors de ladite chaîne de blocs (CB), d'une deuxième donnée (P) obtenue à partir de ladite première donnée (ID), ladite entité de confiance (O) ayant eu connaissance de ladite première donnée (ID) en dehors de ladite chaîne de blocs (CB) ; et
- un module de publication (PUB-A) configuré pour publier la dite deuxième donnée (P) sur ladite chaîne de blocs (CB) et pour envoyer, à un dispositif (D) comportant ladite entité de confiance :
(i) une notification, ladite notification étant envoyée suite à la publication de ladite deuxième donnée (P) dans la chaîne de blocs par ledit terminal (TA) ; ou
(ii) une date (t1) de publication de ladite deuxième donnée (D) dans la chaîne de blocs par ledit terminal (TA) ; ladite entité de confiance étant configurée pour publier ladite deuxième donnée (P) sur la dite chaîne de blocs à une date ultérieure (t2) à la date (t1) de la publication de la deuxième donnée dans la chaîne de blocs par ledit terminal (TA).

13. Equipement de vérification de la connaissance d'une première donnée (ID) par un utilisateur (A) inscrit à une chaîne de blocs (CB), ledit équipement de vérification pouvant consulter ladite chaîne de blocs (CB) et comportant:
- un module de détection (DTC-B) configuré pour détecter :
* une publication sur ladite chaîne de blocs (CB) par un terminal dudit utilisateur (A) d'une deuxième donnée (P); et
* une publication de ladite deuxième donnée (P) sur ladite chaîne de blocs (CB) par une entité de confiance (O) inscrite sur ladite chaîne de blocs (CB), la deuxième donnée ayant été générée par l'entité de confiance à partir de ladite première donnée; et
- un module de décision (CMPR) configuré pour vérifier en fonction desdites publications, si la deuxième donnée (P) est publiée dans la chaîne de blocs par le terminal avant d'être publiée par l'entité de confiance, le résultat de ladite vérification permettant de déterminer si l'utilisateur connaissait ou non la première donnée (ID) à une date antérieure aux dates des publications (E70, E90).

## Patentansprüche

1. Verfahren zum Nachweis der Kenntnis eines ersten Datensatzes (ID) durch einen Benutzer (A), der in einer Blockkette (CB) eingetragen ist, wobei das Verfahren von einer vertrauenswürdigen Instanz (O), die in der Blockkette eingetragen ist, durchgeführt wird und die folgenden Schritte umfasst:
- Erhalt (E30) des ersten Datensatzes (ID) außerhalb der Blockkette (CB);
- Erzeugung (E40) eines zweiten Datensatzes (P) aus dem ersten Datensatz (ID);
- Senden (E50), außerhalb der Blockkette (CB), des zweiten Datensatzes (P) an den Benutzer (A); und
- Veröffentlichung (E90) des zweiten Datensatzes (P) in der Blockkette (CB) nach einer Veröffentlichung (E70) des zweiten Datensatzes in der Blockkette durch ein Endgerät des Benutzers.

2. Verfahren nach Anspruch 1, außerdem umfassend einen Schritt der Erfassung der Veröffentlichung des zweiten Datensatzes in der Blockkette durch ein Endgerät des Benutzers.

3. Verfahren nach Anspruch 1, außerdem umfassend einen Schritt des Wartens auf einen von dem Benutzer mitgeteilten Zeitpunkt der Veröffentlichung oder einen Schritt des Wartens auf die Erfassung einer Hinzufügung mindestens eines Blocks zur Blockkette.

4. Verfahren zum Anfordern einer Bestätigung bei einer vertrauenswürdigen Instanz, die in einer Blockkette (CB) eingetragen ist, dass ein in der Blockkette (CB) eingetragener Benutzer (A) Kenntnis von einem ersten Datensatz (ID) hat, wobei das Verfahren die folgenden Schritte umfasst:
- Empfangen (E60) eines zweiten Datensatzes (P), der aus dem ersten Datensatz (ID) erhalten wurde, außerhalb der Blockkette (CB) von der vertrauenswürdigen Instanz (O), wobei die vertrauenswürdige Instanz (O) außerhalb der Blockkette (CB) Kenntnis von dem ersten Datensatz (ID) erlangt hat; und
- Veröffentlichung (E70) des zweiten Datensatzes (P) in der Blockkette (CB) durch ein Endgerät (TA) des Benutzers (A);
- Versand einer Benachrichtigung an die Vorrichtung (D), die die vertrauenswürdige Instanz (O) umfasst, wobei die Benachrichtigung nach der Veröffentlichung des zweiten Datensatzes (P) in der Blockkette durch das Endgerät (TA) gesendet wird; oder eines Veröffentlichungszeitpunktes (t1) des zweiten Datensatzes (P) in der Kette durch das Endgerät (TA);
wobei die vertrauenswürdige Instanz so konfiguriert ist, dass sie den zweiten Datensatz (P) in der Blockkette zu einem Zeitpunkt (t2) veröffentlicht (E90), der später liegt als der Zeitpunkt (t1) der Veröffentlichung (E70) des zweiten Datensatzes in der Blockkette durch das Endgerät des Benutzers.

5. Verfahren nach Anspruch 4, außerdem umfassend einen Schritt (E22) des Versands, außerhalb der Blockkette (CB), an die vertrauenswürdige Instanz (O):
- eines Veröffentlichungszeitpunktes, zu dem der Schritt der Veröffentlichung durch das Endgerät durchgeführt wird; und/oder
- eines Bereichs von Zeitpunkten, während dessen die vertrauenswürdige Instanz den zweiten Datensatz (P) in der Blockkette (CB) veröffentlichen soll.

6. Verfahren nach einem der Ansprüche 4 bis 5, außerdem umfassend einen Schritt der Auswahl (E10) mindestens einer vertrauenswürdigen Instanz (O), die in der Blockkette eingetragen ist.

7. Verfahren nach einem der Ansprüche 1 bis 6, bei dem die Veröffentlichungsschritte (E70, E90) durch Methoden durchgeführt werden, die in einem von dem Benutzer (A) eingesetzten Smart Contract (SC) identifiziert werden, wobei der Contract außerdem Adressen von Benutzern umfassen kann, die berechtigt sind, diese Methoden aufzurufen.

8. Verfahren zur Überprüfung der Kenntnis eines ersten Datensatzes (ID) durch einen Benutzer (A), der in einer Blockkette (CB) eingetragen ist, wobei das Verfahren durch eine Überprüfungsausrüstung (TB) durchgeführt wird, die die Blockkette (CB) abrufen kann und die folgenden Schritte umfasst:
- Erfassung (E72) einer Veröffentlichung auf der Blockkette (CB) durch ein Endgerät des Benutzers (A) eines zweiten Datensatzes (P), der aus dem ersten Datensatz (ID) erhalten wurde;
- Erfassung (E92) einer Veröffentlichung des zweiten Datensatzes (P) auf der Blockkette (CB) durch eine vertrauenswürdige Instanz (O), die in der Blockkette (CB) eingetragen ist; und
- Überprüfung (E100), in Abhängigkeit von den erfassten Veröffentlichungen, ob der zweite Datensatz (P) durch das Endgerät in der Blockkette veröffentlicht wurde, bevor er durch die vertrauenswürdige Instanz veröffentlicht wurde, wobei das Ergebnis der Überprüfung (E100) es ermöglicht, zu bestimmen, ob der Benutzer den ersten Datensatz (ID) zu einem Zeitpunkt vor den Veröffentlichungszeitpunkten (E70, E90) kannte oder nicht.

9. Computerprogramm (ProgTA, ProgO, ProgTB), umfassend Anweisungen zur Ausführung:
- der Schritte eines Verfahrens zum Nachweis der Kenntnis eines ersten Datensatzes (ID) durch einen Benutzer (A) nach einem der Ansprüche 1 bis 3 oder 7; oder
- der Schritte eines Verfahrens zur Anforderung einer Bestätigung nach einem der Ansprüche 4 bis 7; oder
- der Schritte eines Überprüfungsverfahrens nach Anspruch 8, wenn das Programm von einem Computer (TA, D, TB) ausgeführt wird.

10. Computerlesbares Speichermedium, auf dem ein Computerprogramm nach Anspruch 9 gespeichert ist.

11. Kommunikationsvorrichtung, die eine vertrauenswürdige Instanz (O) umfasst, die in einer Blockkette (CB) eingetragen ist, wobei die Vorrichtung so konfiguriert ist, dass sie den Nachweis der Kenntnis eines ersten Datensatzes (ID) durch einen in der Blockkette eingetragenen Benutzer (A) ermöglicht, wobei die Vorrichtung umfasst:
- Kommunikationsmittel (COM), die so konfiguriert sind, dass sie den ersten Datensatz (ID) außerhalb der Blockkette (CB) erhalten;
- ein Erzeugungsmodul (P_GEN), das so konfiguriert ist, dass es aus dem ersten Datensatz (ID) einen zweiten Datensatz (P) erzeugt;
- wobei die Kommunikationsmittel ferner so konfiguriert sind, dass sie den zweiten Datensatz (P) außerhalb der Blockkette (CB) an den Benutzer (A) senden; und
- ein Veröffentlichungsmodul (PUB-O), das so konfiguriert ist, dass es den zweiten Datensatz (P) in der Blockkette (CB) nach einer Veröffentlichung des zweiten Datensatzes in der Blockkette durch ein Endgerät (TA) des Benutzers (A) veröffentlicht.

12. Endgerät (TA) eines Benutzers (A), der in einer Blockkette (CB) eingetragen ist, wobei das Endgerät so konfiguriert ist, dass es von einer in der Blockkette eingetragenen vertrauenswürdigen Instanz eine Bestätigung über die Kenntnis eines ersten Datensatzes (ID) durch den Benutzer anfordert, wobei das Endgerät (TA) umfasst:
- Kommunikationsmittel (COM), die so konfiguriert sind, dass sie von der vertrauenswürdigen Instanz (D) außerhalb der Blockkette (CB) einen zweiten Datensatz (P) empfangen, der aus dem ersten Datensatz (ID) erhalten wurde, wobei die vertrauenswürdige Instanz (O) außerhalb der Blockkette (CB) Kenntnis von dem ersten Datensatz (ID) hatte; und
- ein Veröffentlichungsmodul (PUB-A), das so konfiguriert ist, dass es den zweiten Datensatz (P) in der Blockkette (CB) veröffentlicht und an eine Vorrichtung (D), umfassend die vertrauenswürdige Instanz, sendet:
(i) eine Benachrichtigung, wobei die Benachrichtigung nach der Veröffentlichung des zweiten Datensatzes (P) in der Blockkette durch das Endgerät (TA) gesendet wird; oder
ii) einen Zeitpunkt (t1) der Veröffentlichung des zweiten Datensatzes (D) in der Blockkette durch das Endgerät (TA); wobei die vertrauenswürdige Instanz so konfiguriert ist, dass sie den zweiten Datensatz (P) in der Blockkette zu einem späteren Zeitpunkt (t2) als dem Zeitpunkt (t1) der Veröffentlichung des zweiten Datensatzes in der Blockkette durch das Endgerät (TA) veröffentlicht.

13. Ausrüstung zur Überprüfung der Kenntnis eines ersten Datensatzes (ID) durch einen Benutzer (A), der in einer Blockkette (CB) eingetragen ist, wobei die Ausrüstung zur Überprüfung die Blockkette (CB) abrufen kann und Folgendes umfasst:
- ein Erfassungsmodul (DTC-B), das so konfiguriert ist, dass es erfasst:
* eine Veröffentlichung eines zweiten Datensatzes (P) in der Blockkette (CB) durch ein Endgerät des Benutzers (A); und
* eine Veröffentlichung des zweiten Datensatzes (P) in der Blockkette (CB) durch eine vertrauenswürdige Instanz (O), die in der Blockkette (CB) eingetragen ist, wobei der zweite Datensatz durch die vertrauenswürdige Instanz aus dem ersten Datensatz erzeugt wurde; und
- ein Entscheidungsmodul (CMPR), das so konfiguriert ist, dass es in Abhängigkeit von den Veröffentlichungen überprüft, ob der zweite Datensatz (P) vom Endgerät in der Blockkette veröffentlicht ist, bevor er von der vertrauenswürdigen Instanz veröffentlicht wird, wobei das Ergebnis der Überprüfung bestimmt, ob der Benutzer den ersten Datensatz (ID) zu einem Zeitpunkt vor den Zeitpunkten der Veröffentlichungen (E70, E90) kannte oder nicht.

## Claims

1. Method allowing knowledge of a first datum (ID) by a user (A) registered with a blockchain (CB) to be proven, said method being implemented by a trusted entity (O) registered on said blockchain and comprising steps of:
- obtaining (E30) said first datum (ID) outside of said blockchain (CB);
- generating (E40) a second datum (P) from said first datum (ID);
- sending (E50), outside of said blockchain (CB), said second datum (P) to said user (A); and
- publishing (E90) said second datum (P) on said blockchain (CB) after publication (E70) of the second datum in the blockchain by a terminal of the user.

2. Method according to Claim 1, further comprising a step of detecting publication of the second datum in the blockchain by a terminal of the user.

3. Method according to Claim 1, further comprising a step of waiting for a publication date communicated by said user or a step of waiting for detection of addition of at least one block to the blockchain.

4. Method for requesting certification from a trusted entity registered with a blockchain (CB) of knowledge of a first datum (ID) by a user (A) registered with said blockchain (CB), said method comprising steps of:
- receiving (E60), outside of said blockchain (CB), from said trusted entity (0), a second datum (P) obtained from said first datum (ID), said trusted entity (O) having been apprised of said first datum (ID) outside of said blockchain (CB); and
- publishing (E70), by means of a terminal (TA) of said user (A), said second datum (P) on said blockchain (CB) ;
- sending, to the device (D) comprising said trusted entity (0): a notification, said notification being sent following publication of said second datum (P) in the blockchain by said terminal (TA); or a date (t1) of publication of said second datum (P) in the chain by said terminal (TA);
said trusted entity being configured to publish (E90) said second datum (P) on said blockchain at a date (t2) subsequent to the date (t1) of publication (E70) of the second datum in the blockchain by the terminal of the user.

5. Method according to Claim 4, further comprising a step (E22) of sending, outside of said blockchain (CB), to said trusted entity (O):
- a publication date on which the step of publishing by means of said terminal is implemented; and/or
- a date range during which said trusted entity must publish said second datum (P) on said blockchain (CB).

6. Method according to either of Claims 4 and 5, further comprising a step (E10) of selecting at least one said trusted entity (O) registered on said blockchain.

7. Method according to any of Claims 1 to 6, wherein said publishing steps (E70, E90) are implemented by methods identified in a smart contract (SC) deployed by said user (A), the contract further possibly comprising addresses of users permitted to invoke these methods.

8. Method for verifying knowledge of a first datum (ID) by a user (A) registered with a blockchain (CB), said method being implemented by a verification equipment (TB) that is able to consult said blockchain (CB) and comprising steps of:
- detecting (E72) publication on said blockchain (CB) by a terminal of said user (A) of a second datum (P) obtained from said first datum (ID);
- detecting (E92) publication of said second datum (P) on said blockchain (CB) by a trusted entity (O) registered on said blockchain (CB); and
- verifying (E100), depending on said detected publications, whether the second datum (P) was published in the blockchain by the terminal before it was published by the trusted entity, the result of said verification (E100) making it possible to determine whether the user knew the first datum (ID) or not at a date prior to the dates of the publications (E70, E90).

9. Computer program (ProgTA, ProgO, ProgTB) comprising instructions for executing:
- steps of a method allowing knowledge of a first datum (ID) by a user (A) to be proven according to any of Claims 1 to 3 or 7; or
- steps of the method for requesting certification according to any of Claims 4 to 7; or
- steps of a verification method according to Claim 8 when said program is executed by a computer (TA, D, TB) .

10. Computer-readable recording medium on which a computer program according to Claim 9 is recorded.

11. Communication device, comprising a trusted entity (0) registered with a blockchain (CB), said device being configured to allow knowledge of a first datum (ID) by a user (A) registered on said blockchain to be proven, said device comprising:
- communication means (COM) configured to obtain said first datum (ID) outside of said blockchain (CB);
- a generation module (P_GEN) configured to generate a second datum (P) from said first datum (ID);
- said communication means further being configured to send, outside of said blockchain (CB), said second datum (P) to said user (A); and
- a publication module (PUB-O) configured to publish said second datum (P) on said blockchain (CB) after publication of the second datum in the blockchain by a terminal (TA) of said user (A).

12. Terminal (TA) of a user (A) registered with a blockchain (CB), said terminal being configured to request certification, from a trusted entity registered with the blockchain, of knowledge of a first datum (ID) by the user, said terminal (TA) comprising:
- communication means (COM) configured to receive, from said trusted entity (D), outside of said blockchain (CB), a second datum (P) obtained from said first datum (ID), said trusted entity (O) having been apprised of said first datum (ID) outside of said blockchain (CB); and
- a publication module (PUB-A) configured to publish said second datum (P) on said blockchain (CB) and to send, to a device (D) comprising said trusted entity:
(i) a notification, said notification being sent following publication of said second datum (P) in the blockchain by said terminal (TA); or
ii) a date (t1) of publication of said second datum (D) in the blockchain by said terminal (TA); said trusted entity being configured to publish said second datum (P) on said blockchain at a date (t2) subsequent to the date (t1) of publication of the second datum in the blockchain by said terminal (TA).

13. Equipment for verifying knowledge of a first datum (ID) by a user (A) registered with a blockchain (CB), said verification equipment being able to consult said blockchain (CB) and comprising:
- a detection module (DTC-B) configured to detect:
* publication on said blockchain (CB) by a terminal of said user (A) of a second datum (P); and
* publication of said second datum (P) on said blockchain (CB) by a trusted entity (O) registered on said blockchain (CB), the second datum having been generated by the trusted entity from said first datum; and
- a decision module (CMPR) configured to verify, depending on said publications, whether the second datum (P) was published in the blockchain by the terminal before it was published by the trusted entity, the result of said verification making it possible to determine whether the user knew the first datum (ID) or not at a date prior to the dates of the publications (E70, E90).
